# EUROPÄISCHE PATENTSCHRIFT

(11) **EP 2 352 930 B1**
(45) Veröffentlichungstag und Bekanntmachung des Hinweises auf die Patenterteilung: **08.05.2013**
(21) Anmeldenummer: 09760724.6
(22) Anmeldetag: 12.11.2009
(51) Int. Cl.: F16D 3/70, F16F 1/373, F16F 1/393

(54) **UNSYMMETRISCHE LAGERUNG**
ASYMMETRICAL MOUNTING
PALIER ASYMÉTRIQUE

(30) Priorität: 17.11.2008 EP 08019999
(43) Veröffentlichungstag der Anmeldung: 10.08.2011
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen
(86) Internationale Anmeldenummer: PCT/EP2009/008044
(87) Internationale Veröffentlichungsnummer: WO 2010/054808

(56) Entgegenhaltungen:
- EP-A- 1 593 867
- EP-A- 1 832 500
- GB-A- 719 734

## Beschreibung

Die Erfindung betrifft eine elastomere Lagerung zur Reduzierung von Schwingungen in Maschinen, die vorwiegend durch von außen einwirkende Kräfte verursacht werden. Aufgrund seiner speziellen Bauweise und Bausymmetrie vermag es die in sämtliche Raumrichtungen auftretenden Kräfte unter optimaler Materialschonung zu verarbeiten. Das erfindungsgemäße Lager ist vorzugsweise für eine kreisförmig angeordnete Verbindung von Rotor-Getriebe-Einheiten mit dem Maschinenträger in Windkraftanlagen geeignet.

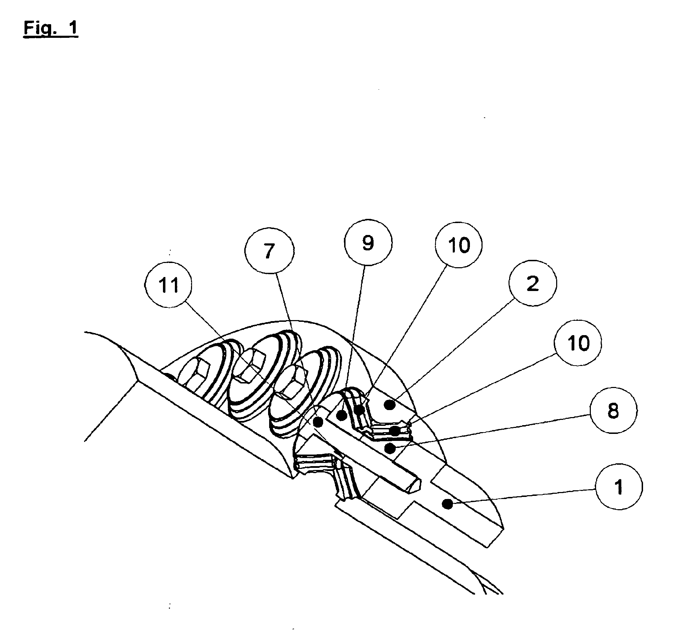

Im Stand der Technik werden diverse Lager für diese Zwecke beschrieben. Eine bereits sehr brauchbare Lösung wird in der EP 1 593 867 B1 dargelegt, die allerdings dort in einer speziellen Kupplung zum Einsatz kommt. Ein solches Lager wird durch das Verspannen von zwei gegeneinander liegenden Konuselementen gebildet und ist schematisch in Abbildung 1 dargestellt. Die Kraftübertragung erfolgt bei diesem Doppelkonuslager vom Getriebeflansch (2) zum Maschinenträger (1) über die beiden verspannten diametralen Konuslager (10), welche durch die Kegelstücke (8) und (9) fliegend gelagert und vorgespannt sind. Die Vorspannung erfolgt mit der Schraube (7). Das System erlaubt eine einwandfreie Kraftübertragung, weist jedoch noch folgenden Nachteil auf: Beim Einleiten zum Beispiel eines Torsionsmoments um die Rotorwellenachse, welche von sämtlichen Lagern jeweils durch eine Radialkraft in diesen Lagern übertragen wird - greift die Radialkraft bei den Konuselementen (10) in der Mitte des jeweiligen Konuslagers an, so dass die resultierende Radialkraft etwa in der Mitte zwischen den beiden Kegeln (8, 9) angreift. Dies hat ein Biegemoment zur Folge, welches zwischen den beiden Kegeln (8, 9) und dem Maschinenflansch (1), übertragen werden muss. Die Übertragung dieses Momentes erfolgt über die Trennfläche (11) und der Trennfläche zwischen Kegel (8) und dem Flansch (1), sowie der Schraubverbindung (7). Die resultierende Belastung der Trennflächen und der Schraubverbindung erfordert, damit die Verbindung keinen Schaden nimmt, eine ausreichend große Dimensionierung der Berührungsflächen und der Schraubverbindung. Dies kann zur Folge haben, dass die Baugröße des gesamten Systems sich deutlich erhöht.

Es bestand somit die Aufgabe, ein Lager für die genannten Zwecke zur Verfügung zu stellen, welche die genannten Nachteile, insbesondere die auftretenden Biegemomente im Bereich der Schraubverbindung (7) und der Kegel (8, 9), vermeidet oder zumindest deutlich reduziert, gleichzeitig aber die Vorteile einer optimierten Schwingungsredzierung wie in der EP 1 593 867 B1 beschrieben, gewährleistet.

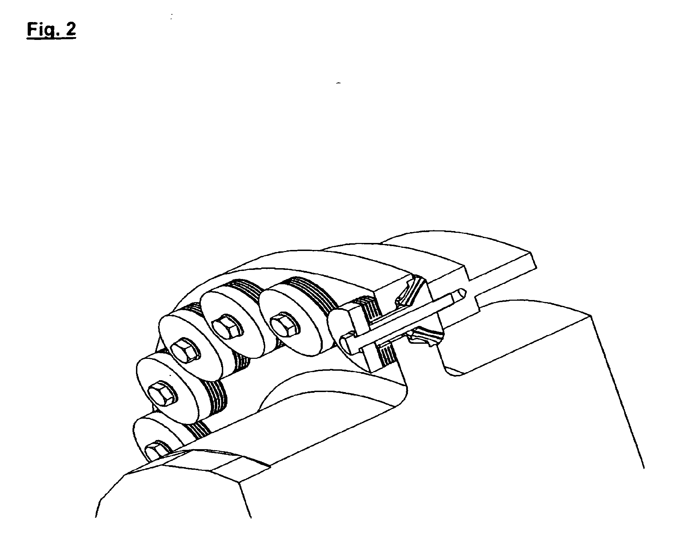

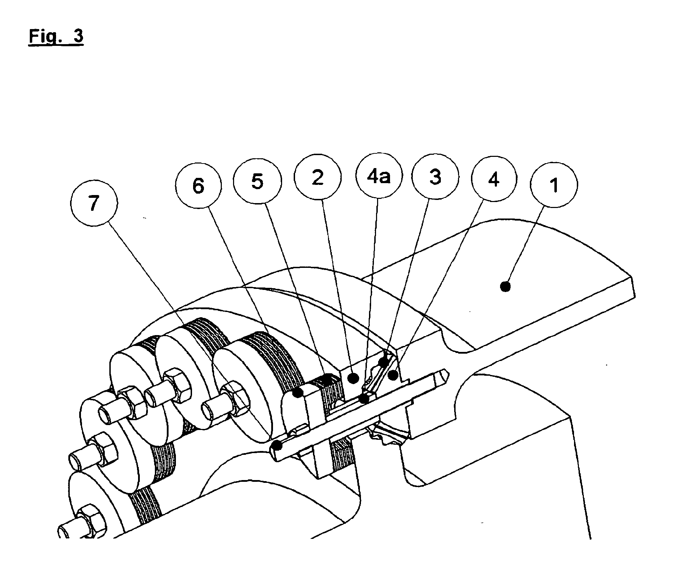

Diese Aufgabe wurde mit der vorliegenden Erfindung, wie sie im folgenden dargestellt und durch die Ansprüche spezifiziert wurde, gelöst. Die erfindungsgemäße Lagerung ist in den Abbildungen 2 und 3 zeichnerisch dargestellt.

Gegenstand der Erfindung ist somit ein elastisches Maschinen- oder Getriebelager zur Übertragung der in allen Raumrichtungen auftretenden Kräfte, Momente und Schwingungen gemäß Anspruch 1.

Das elastische Kraftübertragungsmoment besteht erfindungsgemäß nunmehr aus einem elastischen Konuselement (3) und einem mit diesem axial verspannten elastischen Sandwichelement (5). Während das Konuselement (3) axiale Kräfte und radiale Kräfte überträgt, überträgt das Sandwichelement (5) fast ausschließlich axiale Kräfte. Die resultierende Gesamtkraft, die auf das erfindungsgemäße Lager wirkt, greift nunmehr im Bereich des Konusstückes (4) mit verbreiterten Querschnitt an, so dass das entstehende Biegemoment nicht mehr in dem Maße auf das schmale Verbindungsstück (4a) bzw. dem Spannmittel (7) einwirkt und zu einer Lockerung der Befestigung bzw. zu einer Materialermüdung führt.

Die Steifigkeit des Sandwichelementes (5) ist erfindungsgemäß um etwa den Faktor 2 - 100, vorzugsweise 10 - 100, insbesondere 50 - 100 geringer als die radiale Steifigkeit des Konuselements (3).

Entsprechend dem Verhältnis der radialen Steifigkeiten erfolgt auch die radiale Kraftübertragung in dem Lager. Somit wird in dem Konuselement (3) etwa 2 - 100 mal soviel radiale Kraft übertragen wie in dem Sandwichelement (5). Damit ist die radiale Kraftübertragung in (5) vernachlässigbar klein. Dies hat zur Folge, dass in dem Kegelstück (4) kein großes Biegemoment übertragen werden muss, was zur Entlastung des an das Konusstück (4) angrenzende Zylinderstück (4a), durch welches auch das Spannmittel (7) geführt ist, führt, so dass dieses und auch das Spannmittel lediglich für die entstehenden Zug- und Druckkräfte dimensioniert werden muss.

Auch die Lasteinleitung vom Konusstück (4) in den Befestigungsflansch (1) wird dadurch vereinfacht, dass hier fast reiner Schub übertragen werden muss und das Biegemoment deutlich kleiner ist als in der Konstruktion des Standes der Technik nach Abbildung 1. Kegelstück (4) und Befestigungsflansch (1) können in einer Ausführungsform der Erfindung auch integrale Bestandteile eines einzigen Bauteils sein.

Prinzipiell, kann auch das Konusstück (4) und das Zylinderstück (4a) ein einziges Werkstück sein.

Beide Elemente sind also in axialer Richtung miteinander verspannt. Dabei können beide Elemente in axialer Richtung die gleiche Steifigkeit haben, was jedoch nicht zwingend erforderlich ist. Das Konuselement (3) hat jedoch in radialer Richtung eine deutlich höhere Steifigkeit als das Sandwichelement (5).

Das Vorspannen und die axiale Kraftübertragung erfolgt bei dem Sandwichelement vorzugsweise über eine Druckplatte (6), welche mit einer Bohrung versehen ist, die den Spannbolzen oder die Spannschraube (7) aufnehmen kann.

Gegenstand der Erfindung ist somit ein entsprechendes Lager, welches eine Druckplatte aufweist, die direkt oder indirekt auf dem Sandwichelement (5) aufliegt. In einer besonderen Ausführungsform bilden die Druckplatte (6) und das Sandwichelement (5) eine bauliche Einheit.

Es hat sich weiterhin gezeigt, dass die Kräfteverteilung auf das gesamte Lagerelement besonders vorteilhaft ist, wenn das feste unelastische kegelförmige Konusstück (4) nicht durch eine einfache Kegelfläche gebildet wird, sondern ein konvexe Wölbung aufweist. Der Effekt kann noch verstärkt werden, wenn weiterhin auch das elastomere Konuselement (3) innenseitig und vorzugsweise auch außenseitig entsprechend konkav gekrümmt ist, so dass seine Innenfläche passgenau auf die Außenfläche des Konusstückes (4) zu liegen kommen kann.

In einer weiteren Ausführungsform kann das Konusstück (4) mit dem Zylinderstück (4a) eine bauliche Einheit bilden.

Somit ist Gegenstand der Erfindung ein entsprechendes Lager bei dem das Konusstück (4) eine konvex gewölbte Fläche besitzt, auf welche die Innenfläche des Konuselementes (3) aufliegt. Auch hier können erfindungsgemäß in einer weiteren Ausführungsform die Bauteile (3) und (4) zu einer einzigen baulichen Einheit zusammengefasst sein.

Gegenstand der Erfindung ist auch ein entsprechendes Lager, bei dem die Innenfläche des Konuselements (3) konkav gewölbt ist, und vorzugsweise auch zusätzlich die Außenfläche des Konuselements (3) konkav gewölbt ist.

Die Elastomerelemente (3) und (5) weisen 1 oder mehrere Elastomerschichten auf. In der Regel bestehen sie im wesentlichen aus mindestens zwei Elastomerschichten, welche durch eine steife Zwischenschicht, meist eine Metallplatte, getrennt sind. Vorzugsweise bestehen die Elemente aus drei bis fünf elastomeren Schichten mit entsprechenden Zwischenplatten, bzw. -schichten. Die Elemente sind nach außen von ebenfalls steifen Schichten/Platten abgeschlossen.

Die für die erfindungsgemäßen Lager verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben.

Die steifen Zwischenplatten bzw. -schichten sind erfindungsgemäß aus Werkstoffen mit hoher Steifigkeit, hoher Festigkeit und geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Zwischenbleche und die Elastomermaterialien werden in der Regel während der Vulkanisierung miteinander verbunden.

Das Konuselement (3) des erfindungsgemäßen Lagers sollte einen Konuswinkel von 10 - 50° in Bezug zu Maschinenachse (a) oder zur Achse des Spannelementes (7) entgegen oder in Einschraubrichtung aufweisen. Vorzugsweise besitzt es einen Konuswinkel von 25 - 50°.

Das erfindungsgemäße Lager kann vielseitig und unterschiedlich eingesetzt werden. Es ist als sogenannte fliegende Lagerung insbesondere geeignet für Windkraftanlagen, um insbesondere eine umlaufende elastische Verbindung zwischen der Rotorwelle, dem Getriebe oder einer Rotor-Getriebe-Einheit und dem Maschinenträger herzustellen.

Es kann aber auch in Kupplungen wie in der EP 1 593 867 B1 beschrieben anstelle der dort genannten Elastomerlager eingesetzt werden.

Auch kann das erfindungsgemäße Lager als Turmentkopplung in Windkraftanlagen, wie in der EP1 065 374 B1 beschrieben, eingesetzt werden, was zusätzlich zu einer Vereinfachung führt.

Ebenso ist es möglich, Maschinenfüße gemäß der EP1 065 374 B1 zu verbessern, in dem das Biegemoment zwischen den Flanschen mit der beschriebenen Konstruktion reduziert und damit die Schraubenkräfte kleiner zu gestaltet werden können.

**Beschreibung der Bezugsgrößen in den Abbildungen**

| | |
|---|---|
| 1 | Befestigungsflansch |
| 2 | Klemmflansch |
| 3 | elastomeres Konuselement |
| 4 | Konusstück |
| 4a | Zylinderstück |
| 5 | elastomeres Sandwichelement |
| 6 | Druckplatte |
| 7 | Spannmittel (Schraube/Bolzen) |
| 8 | Kegelstück Einspannseite |
| 9 | Kegelstück fliegend gelagert |
| 10 | symmetrisches elastomeres Konuslager |
| 11 | Trennung zwischen den Kegeln |

**Beschreibung der Abbildungen**

| | |
|---|---|
| Bild 1 | Konventionelle Elemente kreisförmig angeordnet |
| Bild 2 | Kreisförmige Anordnung der Elemente gemäß der Erfindung |
| Bild 3 | Schnitt durch ein Lager gemäß der Erfindung |

## Patentansprüche

1. Elastisches Maschinen- oder Getriebelager zur Übertragung und Dämpfung von in allen Raumrichtungen auftretenden Kräften, Momenten und Schwingungen umfassend ein axial ausgerichtetes elastomeres Sandwichelement (5) und ein oberhalb oder unterhalb davon angebrachtes elastomeres Konuselement (3), dessen Achse senkrecht zu dem Sandwichelement (5) ausgerichtet ist und dessen verjüngtes Ende gegenüber dem Element (5) positioniert ist, wobei das elastomere Sandwichelement (5) und das elastomere Konuselement (3) durch ein Konusstück (4), welches von dem Konuselement (3) zentrisch umschlossen wird, und ein Zylinderstück (4a), welches von dem Sandwichelement (5) zentrisch umschlossen wird, miteinander in Verbindung steht, und wobei das elastomere Konuselement (3), das elastomere Sandwichelement (5), das Konusstück (4) und das Zylinderstück (4a) jeweils eine zentrische axial ausgerichtete Bohrung zur Aufnahme eines Spannbolzens oder einer Spannschraube (7) zur Verspannung eines zwischen dem elastomeren Konuselement (3) und dem Sandwichelement (5) gelagerten Klemmflansches (2) mit dem unterhalb des elastomeren Konuselementes (3) angebrachten Befestigungsflansch (1) aufweisen.

2. Lager nach Anspruch 1, **dadurch gekennzeichnet, dass** das Konuselement (3) in radialer Richtung eine deutlich höhere Steifigkeit aufweist als das Sandwichelement (5).

3. Lager nach Anspruch 1 oder 2, **dadurch gekennzeichnet, dass** Sandwichelement (5) und Druckplatte (6) eine bauliche Einheit darstellen.

4. Lager nach einem der Ansprüche 1 - 3, **dadurch gekennzeichnet, dass** das Konusstück (4) und das elastomere Konuselement (3) ein einziges Bauteil sind.

5. Lager nach einem der Ansprüche 1 - 4, **dadurch gekennzeichnet, dass** Konusstück (4) und Zylinderstück (4a) ein einziges Bauteil sind.

6. Lager nach einem der Ansprüche 1 - 5, **dadurch gekennzeichnet, dass** das Konusstück (4) und der Befestigungsflansch (1) ein einziges Bauteil sind.

7. Lager nach einem der Ansprüche 1 - 6, **dadurch gekennzeichnet, dass** auf der äußeren Seite des Sandwichelements (5) eine Druckplatte (6) mit einer zentrischen Bohrung zur Aufnahme des Spannmittels (7) angebracht ist.

8. Lager nach einem der Ansprüche 1 - 6, **dadurch gekennzeichnet, dass** das Konusstück (4) eine konvex gewölbte Fläche besitzt, auf welche die Innenfläche des Konuselements (3) aufliegt.

9. Lager nach Anspruch 8, **dadurch gekennzeichnet, dass** die Innenfläche des Konuselements (3) konkav gewölbt ist.

10. Lager nach Anspruch 9, **dadurch gekennzeichnet, dass** zusätzlich die Außenfläche des Konuselements (3) konkav gewölbt ist.

11. Lager nach einem der Ansprüche 1 - 10, **dadurch gekennzeichnet, dass** Konuselement (3) und Sandwichelement (5) eine oder mehrere Elastomerschichten-aufweisen, wobei die Elastomerschichten durch jeweils eine nicht-elastische Zwischenschicht getrennt sind.

12. Lager nach einem der Ansprüche 1 - 11, **dadurch gekennzeichnet, dass** das Konuselement (3) einen Konuswinkel von 10 - 50° zur Achse des Spannelementes (7) in Einschraubrichtung aufweist.

13. Lager nach Anspruch 12, **dadurch gekennzeichnet, dass** der Konuswinkel 25 - 35° beträgt.

14. Lager nach einem der Ansprüche 1 - 11, **dadurch gekennzeichnet, dass** das Konuselement (3) einen Konuswinkel von 10 - 50° zur Achse des Spannelementes (7) entgegen der Einschraubrichtung aufweist.

15. Lager nach Anspruch 14, **dadurch gekennzeichnet, dass** der Konuswinkel 25 - 35° beträgt.

16. Verwendung eines Lagers gemäß der Ansprüche 1 - 15 zur Dämpfung der Schwingungskräfte von sich in alle Raumrichtungen zueinander bewegenden iviaschinenteilen.

17. Verwendung eines Lagers gemäß der Ansprüche 1 -15 für eine umlaufenden elastischen Verbindung zwischen Getriebe, Rotorwelle oder einer Rotor-Getriebeeinheit und dem Maschinenträger in Windkraftanlagen.

## Claims

1. Elastic machine or gearbox bearing for the transmission and attenuation of forces, moments and vibrations occurring in all spatial directions, comprising an axially directed elastomeric sandwich element (5) and an elastomeric cone element (3) mounted above or below the latter, whose axis is aligned perpendicular to the sandwich element (5) and whose tapered end is positioned opposite the element (5), where the elastomeric sandwich element (5) and the elastomeric cone element (3) are connected to one another by a cone piece (4), which is centrally surrounded by the cone element (3), and a cylinder piece (4a), which is centrally surrounded by the sandwich element (5), and where the elastomeric cone element (3), the elastomeric sandwich element (5), the cone piece (4) and the cylinder piece (4a) each have a central axially directed hole for the accommodation of a tensioning bolt or a tensioning screw (7) for tensioning a clamping flange (2), which is mounted between the elastomeric cone element (3) and the sandwich element (5), to the attachment flange (1), which is mounted below the elastomeric cone element (3).

2. Bearing according to Claim 1, **characterised in that** the cone element (3) has significantly greater rigidity in the radial direction than the sandwich element (5).

3. Bearing according to Claim 1 or 2, **characterised in that** the sandwich element (5) and the pressure plate (6) represent a physical unit.

4. Bearing according to one of Claims 1 - 3, **characterised in that** the cone piece (4) and the elastomeric cone element (3) are a single component.

5. Bearing according to one of Claims 1 - 4, **characterised in that** the cone piece (4) and cylinder piece (4a) are a single component.

6. Bearing according to one of Claims 1 - 5, **characterised in that** the cone piece (4) and the attachment flange (1) are a single component.

7. Bearing according to one of Claims 1 - 6, **characterised in that** a pressure plate (6) having a central hole for the accommodation of the tensioning means (7) is mounted on the outside of the sandwich element (5).

8. Bearing according to one of Claims 1 - 6, **characterised in that** the cone piece (4) has a convex surface on which the inner surface of the cone element (3) rests.

9. Bearing according to Claim 8, **characterised in that** the inner surface of the cone element (3) is concave.

10. Bearing according to Claim 9, **characterised in that** the outer surface of the cone element (3) is also concave.

11. Bearing according to one of Claims 1 - 10, **characterised in that** the cone element (3) and sandwich element (5) have one or more elastomer layers, where the elastomer layers are each separated by a non-elastic interlayer.

12. Bearing according to one of Claims 1 - 11, **characterised in that** the cone element (3) has a cone angle of 10 - 50° to the axis of the tensioning element (7) in the screw-in direction.

13. Bearing according to Claim 12, **characterised in that** the cone angle is 25 - 35°.

14. Bearing according to one of Claims 1 - 11, **characterised in that** the cone element (3) has a cone angle of 10 - 50° to the axis of the tensioning element (7) against the screw-in direction.

15. Bearing according to Claim 14, **characterised in that** the cone angle is 25 - 35°.

16. Use of a bearing according to Claims 1 - 15 for the attenuation of the vibration forces of machine parts moving in all spatial directions relative to one another.

17. Use of a bearing according to Claims 1 - 15 for a circumferential elastic connection between gearbox, rotor shaft or a rotor/gearbox unit and the bedplate in wind turbines.

## Revendications

1. Palier de machine élastique ou de boîte de transmission pour la transmission et l'atténuation de forces, de moments et de vibrations survenant dans toutes les directions de l'espace, comprenant un élément de sandwich élastomérique dirigé axialement (5) et un élément de cône élastomérique (3) monté au-dessus ou au-dessous de ce dernier, dont un axe est aligné perpendiculairement à l'élément de sandwich (5) et dont une extrémité évasée est positionnée à l'opposé de l'élément (5), où l'élément de sandwich élastomérique (5) et l'élément de cône élastomérique (3) sont connectés l'un à l'autre par une pièce de cône (4), laquelle est entourée centralement par l'élément de cône (3), et par une pièce de cylindre/vérin (4a), laquelle est entourée centralement par l'élément de sandwich (5), et où l'élément de cône élastomérique (3), l'élément de sandwich élastomérique (5), la pièce de cône (4) et la pièce de cylindre (4a) comportent chacun un trou central dirigé axialement pour le logement d'un boulon de tension ou d'une vis de tension (7) pour mettre sous tension un flanc de fixation (2), lequel est monté entre l'élément de cône élastomérique (3) et l'élément de sandwich (5), sur le flanc de fixation (1), lequel est monté au-dessous de l'élément de cône élastomérique (3).

2. Palier selon la revendication 1, **caractérisé en ce que** l'élément de cône (3) présente une rigidité dans la direction radiale significativement plus grande que celle de l'élément de sandwich (5).

3. Palier selon la revendication 1 ou 2, **caractérisé en ce que** l'élément de sandwich (5) et la plaque de pression (6) représentent une unité physique.

4. Palier selon l'une des revendications 1 - 3, **caractérisé en ce que** la pièce de cône (4) et l'élément de cône élastomérique (3) sont un unique composant.

5. Palier selon l'une des revendications 1 - 4, **caractérisé en ce que** la pièce de cône (4) et la pièce de cylindre (4a) sont un unique composant.

6. Palier selon l'une des revendications 1 - 5, **caractérisé en ce que** la pièce de cône (4) et le flanc de fixation (1) sont un unique composant.

7. Palier selon l'une des revendications 1 - 6, **caractérisé en ce qu'**une plaque de pression (6) comportant un trou central pour le logement du moyen de tension (7) est montée sur l'extérieur de l'élément de sandwich (5).

8. Palier selon l'une des revendications 1 - 6, **caractérisé en ce que** la pièce de cône (4) comporte une surface convexe sur laquelle la surface interne de l'élément de cône (3) repose.

9. Palier selon la revendication 8, **caractérisé en ce que** la surface interne de l'élément de cône (3) est concave.

10. Palier selon la revendication 9, **caractérisé en ce que** la surface externe de l'élément de cône (3) est également concave.

11. Palier selon l'une des revendications 1 - 10, **caractérisé en ce que** l'élément de cône (3) et l'élément de sandwich (5) comportent une ou plusieurs couches élastomériques, où les couches élastomériques sont chacune séparées par une intercouche non élastique.

12. Palier selon l'une des revendications 1 - 11, **caractérisé en ce que** l'élément de cône (3) présente un angle de cône de 10 - 50° par rapport à l'axe de l'élément de tension (7) dans la direction de vissage.

13. Palier selon la revendication 12, **caractérisé en ce que** l'angle de cône est de 25 - 35°.

14. Palier selon l'une des revendications 1 - 11, **caractérisé en ce que** l'élément de cône (3) présente un angle de cône de 10 - 50° par rapport à l'axe de l'élément de tension (7) à l'encontre de la direction de vissage.

15. Palier selon la revendication 14, **caractérisé en ce que** l'angle de cône est de 25 - 35°.

16. Utilisation d'un palier selon les revendications 1 - 15 pour l'atténuation des forces de vibration de parties de machine se déplaçant dans toutes les directions de l'espace les unes par rapport aux autres.

17. Utilisation d'un palier selon l'une des revendications 1 - 15 pour une connexion élastique circonférentielle entre une boîte de transmission, un arbre de rotor ou une unité de rotor/boîte de transmission et ia plaque d'appui dans des éoliennes.
